# EUROPEAN PATENT APPLICATION

(11) **EP 4 850 850 A1**
(43) Date of publication of application: **09.12.2026**
(21) Application number: 25749181.1
(22) Date of filing: 03.02.2025
(51) Int. Cl.: B23K 35/26, B22F 1/00, B22F 9/00, B23K 35/14, B23K 35/22, C22C 13/00, C22C 13/02

(54) **SOLDER ALLOY, SOLDER PASTE, SOLDER BALL, SOLDER PREFORM, SOLDER JOINT, ON-VEHICLE ELECTRONIC CIRCUIT, ECU ELECTRONIC CIRCUIT, ON-VEHICLE ELECTRONIC CIRCUIT DEVICE, AND ECU ELECTRONIC CIRCUIT DEVICE**

(30) Priority: 04.02.2024 JP 2024015315
(71) Applicant: Senju Metal Industry Co., Ltd., Tokyo 120-8555 (JP)
(72) Inventor: IIJIMA Yuki, Tokyo 120-8555 (JP); YOKOYAMA Takahiro, Tokyo 120-8555 (JP)
(74) Representative: Zimmermann & Partner Patentanwälte mbB
(86) International application number: PCT/JP2025/003328
(87) International publication number: WO 2025/164804

(57) **Abstract**

Provided are a solder alloy, a solder paste, a solder ball, a solder preform, a solder joint, a vehicle-mounted electronic circuit, an ECU electronic circuit, a vehicle-mounted electronic circuit device, and an ECU electronic circuit device, each of which has a low melting point, high shear strength, an appropriate fracture mode, and excellent heat cycle resistance. A solder alloy has an alloy composition consisting of, by mass%, Ag: 2.0 to 3.6%, Cu: 0.6 to 0.9%, In: 1.0 to 5.0%, Sb: 3.0 to 5.0%, Fe: 0.0010 to 0.0300%, and Co: 0.0010 to 0.0500%, with the balance being Sn. Preferably, the alloy composition further contains, by mass%, at least one of Zr, Ge, Ga, P, As, Pb, Zn, Mg, Cr, Ti, Mo, Pt, Pd, Au, Al, and Si: 0.100% or less in total.

## Description

### Technical Field

The present invention relates to a solder alloy, a solder paste, a solder ball, a solder preform, a solder joint, a vehicle-mounted electronic circuit, an ECU electronic circuit, a vehicle-mounted electronic circuit device, and an ECU electronic circuit device.

### Background Art

A vehicle is mounted with an electronic circuit in which electronic components are soldered to a printed circuit board (hereinafter referred to as a "vehicle-mounted electronic circuit"). Vehicle-mounted electronic circuits are used in devices that electrically control an engine, a power steering, a brake, and the like, and are essential safety components for vehicle travel. In particular, a vehicle-mounted electronic circuit called an ECU (Engine Control Unit), which is an electronic circuit that controls a vehicle with a computer for improving fuel efficiency, needs to be capable of operating in a stable state without failure for a long period of time. Due to an increased mounting region, such a vehicle-mounted electronic circuit has come to be mounted in a place that receives various external loads such as temperature difference, impact, and vibration.

For example, a vehicle-mounted electronic circuit mounted in an engine room may be exposed to a high temperature of 125°C or higher during operation of the engine. On the other hand, if the vehicle is in a cold area, the engine is exposed to a low temperature of -40°C or lower when the engine is stopped. As described above, a highly reliable solder alloy is used for a vehicle-mounted electronic circuit used in a severe usage environment.

Conventionally, Sn-Ag-Cu solder alloys have been used as highly versatile solder alloys. However, the Sn-Ag-Cu solder alloy has a problem that, as described above, in a severe environment that has not been conventionally assumed, the intermetallic compound layer formed at the joint interface becomes thick and peeling may occur at the joint interface between the electrode and the solder alloy due to shear stress. Therefore, there is a demand for solder alloys that maintain joining strength even in a severe usage environment, and various studies have been conducted heretofore.

Patent Document 1 discloses an Sn-Ag-Cu-In-Sb-Co-Ge solder alloy containing In, Sb, and Co in an Sn-Ag-Cu solder alloy as a solder alloy having high heat cycle resistance. The same document states that such a solder alloy is capable of suppressing lift-off in addition to providing heat cycle resistance. In order to exert this effect, the same document also describes that Bi has been conventionally added to suppress an increase in melting point caused by Sb, however, In is contained instead of Bi to improve lift-off.

Patent Document 2 discloses an Sn-Ag-Cu-In-Sb-Ni-Co solder alloy as a solder alloy having high heat cycle resistance. The same document explains that such a solder alloy can suppress generation of voids and lift-off in addition to providing heat cycle resistance. In addition, the same document states that, by balancing the contents of Sb and In, not only is heat cycle resistance improved, but lift-off and generation of voids are suppressed. In addition, the same document describes that Fe or the like may be further contained from the viewpoint of ensuring heat cycle resistance and suppressing generation of voids.

### Citation List

### Patent Document

Patent Document 1: Japanese Patent Publication No. 6349615 B
Patent Document 2: Japanese Patent Publication No. 6420936 B

### Summary of Invention

### Technical Problem

As described above, in each of the inventions described in Patent Documents 1 and 2, heat cycle resistance and lift-off are evaluated. In Patent Document 2, generation of voids is further evaluated. In addition, a melting point is evaluated in order to suppress an increase in reflow temperature.

However, these evaluations alone are insufficient as a solder alloy used for a vehicle-mounted electronic circuit. For example, for a vehicle-mounted electronic circuit, when a vehicle on which the electronic circuit is mounted travels on a rough road, external stress is applied to the electronic circuit. Therefore, it is very important for a solder joint to exhibit high shear strength.

In addition, even if a solder joint that is less likely to fracture is formed, the solder joint eventually fractures when stress is continuously applied to the solder joint. It is conceivable that such continuous stress is constantly applied by being exposed to an environment with drastic temperature changes. This is due to the difference in thermal expansion coefficients of the electrode, the intermetallic compound formed at the joint interface, and the bulk. In particular, even if the load of the solder joint becomes large, it should not be in the fracture mode in which a fractured portion becomes the joint interface. Since the joint interface is joined to the electrode, it is not easy to relieve the stress at the joint interface. However, physical and electrical loads are mainly applied to the joint interface of the solder joint. Therefore, it is considered that the fracture can be suppressed by relieving the stress in the bulk that is relatively easily deformed.

However, Patent Documents 1 and 2 do not study shear strength and a fracture mode at all, and it is hard to say that actual conditions in use of solder joints are reflected. Since the solder joint electrically connects a board or the like to an electronic component or the like, fracture at the joint interface should be avoided as much as possible.

On the other hand, as described above, studies in an environment in which stress is constantly applied to a solder joint are conducted and evaluated by using a heat cycle test. In this regard, heat cycle resistance is studied in the inventions described in Patent Documents 1 and 2. However, according to Patent Document 1, the total length of the cracks at 2000 cycles is evaluated with an average value of 4 samples. In addition, according to Patent Document 2, it is considered that the occurrence of cracks at 3000 cycles is observed in 10 samples, and the presence or absence of cracks extending across the solder joint is evaluated.

As described in Patent Document 1, in the case of evaluating only by the average value, assuming that there is a sample having a short total length of the crack and a sample having a long total length of the crack, the sample is regarded as exhibiting excellent evaluation as long as the average value is small. Actually, if the sample having the long total length of the crack is included, the problem of heat cycle resistance remains as a solder joint, however, this problem is overlooked.

As described in Patent Document 2, it is considered that the evaluation enables identification of cracks in which the solder joint is completely fractured to a large extent. However, even if there is a sample having cracks that do not extend across the solder joint but are close to extending across the solder joint, the sample is regarded as exhibiting excellent evaluation results. If a large number of samples in which cracks are close to extending across the solder joint are observed among the 10 samples, it must be considered that there is some problem, but such a sample group is also regarded as samples exhibiting excellent evaluation results. Furthermore, in the invention described in Patent Document 2, cracks at 3000 cycles are evaluated, in a case where there is a concern that multiple cracks extending across the solder joint may occur if the number of cycles is slightly increased, it should be considered that a problem of heat cycle resistance remains.

In particular, in the case of a solder joint mounted on a vehicle-mounted electronic circuit, fracture of the solder joint should be suppressed as much as possible from the viewpoint of safety. In the evaluation of heat cycle resistance in Patent Documents 1 and 2, fracture may occur after an extremely small number of cycles in some cases. That is, when the evaluation results vary significantly, samples that immediately fracture after a small number of cycles may be included among those considered to be acceptable.

As described above, Patent Documents 1 and 2 do not study shear strength and a fracture mode at all which are essential properties as a solder joint. In addition, in recent years, electrification of vehicles has progressed, and it is considered that the number of boards to be mounted is increasing, so that it is urgent to develop a solder alloy that ensures heat cycle resistance with high probability. Moreover, in view of the heat resistance of the electronic components, it is also desired to exhibit a melting point similar to the conventional solder alloy.

Therefore, an object of the present invention is to provide a solder alloy, a solder paste, a solder ball, a solder preform, a solder joint, a vehicle-mounted electronic circuit, an ECU electronic circuit, a vehicle-mounted electronic circuit device, and an ECU electronic circuit device, each of which has a low melting point, high shear strength, an appropriate fracture mode, and excellent heat cycle resistance.

### Solution to Problem

The present inventors have re-examined the solder alloys disclosed in Patent Documents 1 and 2. Among the solder alloys disclosed in both Documents, the Sn-Ag-Cu-In-Sb-Co-Ge solder alloy of Example 12 in Patent Document 1 and the Sn-Ag-Cu-In-Sb-Ni-Co-Fe solder alloy of Example 15 in Patent Document 2 have shear strength substantially the same as that of the conventional solder alloys, and it has been found that improvements are still possible.

These solder alloys do not have an alloy composition designed for the purpose of improving shear strength. It should be understood that solder alloys are such that, for each solder alloy, when the content or the like of even one of the constituent components is different, the overall properties are generally different, and therefore the entire combination of alloy elements having predetermined contents is technically evaluated as an integrated whole.

Therefore, the present inventors conducted detailed studies on the improvement of the fracture mode and the shear strength while suppressing the increase in the melting point. As a result, it has been found that when a predetermined amount of Fe is added to Example 12 of Patent Document 1, the melting point decreases by about 8 to 10°C. This is presumably because, in the Sn-Ag-Cu-In-Sb-Co-Ge solder alloy, when a predetermined amount of Fe is added, the structure of the solder alloy further becomes finer due to the synergistic effect with Co, and precipitation of a coarse compound is suppressed.

In addition, it has been found that when Fe is added to the Sn-Ag-Cu-In-Sb-Co-Ge solder alloy, an equivalent melting point, shear strength, and fracture mode can be obtained regardless of whether Ge is contained or not. Along with this, it has been found that Ge can be handled as an optional element in the Sn-Ag-Cu-In-Sb-Co-Fe solder alloy.

In Example 15 of Patent Document 2, it has been found that the melting point was slightly higher. This is presumably because when Ni is contained in the Sn-Ag-Cu-In-Sb-Co-Fe solder alloy, a solid phase derived from Ni starts to precipitate in a higher temperature range during the solidification process. In addition, it is considered that the melting point was increased as a result of a slight deviation from the eutectic composition of Sn-Ag-Cu due to the low Cu content. Therefore, it has been found that when Ni is removed from Example 15 of Patent Document 2 and the Cu content is increased by 0.1 to 0.4%, the melting point is lowered and the shear strength is remarkably improved.

Moreover, in a composition containing Co or Fe to such an extent that the alloy structure becomes fine, it has been found that an appropriate fracture mode is exhibited because fracture occurs in the bulk. However, it has also been found that even when the Co and Fe contents are adjusted, if the Ag and Sb contents are excessively high, fracture occurs at the joint interface. It is presumed that such interfacial fracture occurs due to an increase in the bulk strength caused by the precipitation of compounds, and that a similar result also occurs when the Co or Fe content is excessively high. In addition, it has been found that when the Cu content is high, the shear strength is deteriorated and the fracture mode also becomes the joint interface. This is presumably because the alloy becomes hypereutectic and coarse Cu₆Sn₅ precipitates at the joint interface.

In addition to the above findings, Patent Documents 1 and 2 show that heat cycle resistance can be exhibited. However, the present inventors have confirmed that some of the Examples of the respective Patent Documents are fractured after an extremely small number of cycles. This indicates that the evaluation results vary significantly. Therefore, even among solder alloys that have been considered to have high heat cycle resistance under conventional evaluation methods, some include those having low heat cycle resistance, and thus more accurate evaluation is required. Therefore, the present inventors have found that it is most effective to evaluate the number of fracture cycles in the evaluation of heat cycle resistance with a standard deviation. By performing the evaluation with the standard deviation, a solder alloy having low heat cycle resistance, which has been overlooked so far, can be extracted, and the heat cycle resistance can be evaluated with higher accuracy.

Then, the present inventors obtained the number of fracture cycles as a standard deviation for evaluation of heat cycle resistance. As a result, it has been found that a solder alloy in which each constituent element is within a predetermined range has a low melting point, a high shear strength, and an appropriate fracture mode as described above, and in addition, the standard deviation of the number of fracture cycles is equal to or less than a predetermined value, and the present invention has been completed. The present invention completed from these findings is as follows.
(0) A solder alloy consisting of, by mass%, Ag: 2.0 to 3.6%, Cu: 0.6 to 0.9%, In: 1.0 to 5.0%, Sb: 3.0 to 5.0%, Fe: 0.0010 to 0.0300%, Co: 0.0010 to 0.0500%, with the balance being Sn.
(1) A solder alloy having an alloy composition consisting of, by mass%, Ag: 2.0 to 3.6%, Cu: 0.6 to 0.9%, In: 1.0 to 5.0%, Sb: 3.0 to 5.0%, Fe: 0.0010 to 0.0300%, Co: 0.0010 to 0.0500%, with the balance being Sn.
(2) The alloy composition (solder alloy) according to (0) or (1) above, wherein, by mass%, the alloy composition further contains at least one of Zr, Ge, Ga, P, As, Pb, Zn, Mg, Cr, Ti, Mo, Pt, Pd, Au, Al, and Si: 0.100% or less in total.
(3) The alloy composition (solder alloy) according to any one of (0) to (2) above, wherein the alloy composition satisfies the following Relations (1) and (2): $0.0020 ≦ Ag \times Cu \times In \times Sb \times Fe \times Co ≦ 0.0090$ (1) $445 ≦ In / \left(Ag\times Cu\times Sb\times Fe\times Co\right) ≦ 3560$ (2) wherein Ag, Cu, In, Sb, Fe, and Co in the Relations (1) and (2) each represent the content in mass% thereof in the solder alloy.
(4) A solder paste having a solder powder consisting of the solder alloy according to any one of (0) to (2).
(5) A solder ball consisting of the solder alloy according to any one of (0) to (2) above.
(6) A solder preform consisting of the solder alloy according to any one of (0) to (2) above.
(7) A solder joint having the solder alloy according to any one of (0) to (2) above.
(8) A vehicle-mounted electronic circuit having the solder alloy according to any one of (0) to (2) above.
(9) An ECU electronic circuit having the solder alloy according to any one of (0) to (2) above.
(10) A vehicle-mounted electronic circuit device comprising the vehicle-mounted electronic circuit according to (8) above.
(11) An ECU electronic circuit device comprising the ECU electronic circuit according to (9) above.

### Brief Description of Drawings

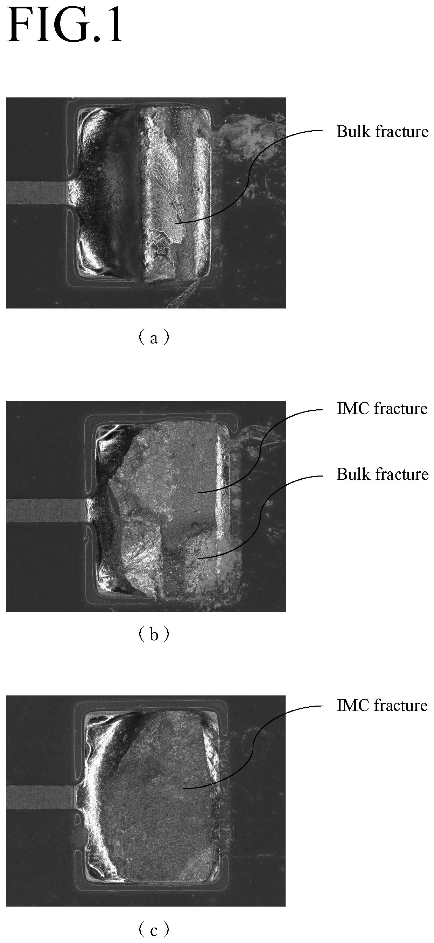

[FIG. 1] FIG. 1 shows an optical microscope photograph of a sample after the shear strength is measured, FIG. 1(a) shows Example 4, FIG. 1(b) shows Comparative Example 19, and FIG. 1(c) shows Comparative Example 3.

### Description of Embodiments

The present invention is described in more detail below. In this description, "%" relating to the solder alloy composition refers to "mass%" unless otherwise specified.

### 1. Solder Alloy

### (1) Ag: 2.0 to 3.6%

Ag contributes to improvement of shear strength, optimization of a fracture mode by precipitation of Ag₃Sn, reduction of a melting point, and improvement of heat cycle resistance. When the Ag content is less than 2.0%, the precipitation amount of the compound is low, and the shear strength decreases. In terms of the lower limit, the Ag content is 2.0% or more, preferably 2.5% or more, more preferably 2.7% or more, and further preferably 3.0% or more.

On the other hand, when the Ag content is more than 3.6%, since a large amount of Ag₃Sn is precipitated due to becoming hypereutectic and the bulk strength is increased, the fracture mode becomes the joint interface. In addition, the shear strength may decrease, and the melting point may increase due to precipitation of a large amount of the compound. Moreover, since the bulk strength increases, cracks occur during the heat cycle test, the standard deviation increases, and the heat cycle resistance becomes poor. In terms of the upper limit, the Ag content is 3.6% or less, preferably 3.4% or less, and more preferably 3.2% or less.

### (2) Cu: 0.6 to 0.9%

Cu contributes to improvement of shear strength, optimization of a fracture mode by controlling a formation amount of an intermetallic compound formed at a joint interface, reduction of a melting point, and improvement of heat cycle resistance. In addition, when the content is appropriate, precipitation of coarse Cu₆Sn₅ can be suppressed. When the Cu content is less than 0.6%, Cu₆Sn₅ is not sufficiently precipitated, and the shear strength becomes poor. In addition, the melting point increases. In terms of the lower limit, the Cu content is 0.6% or more, and preferably 0.7% or more.

On the other hand, when the Cu content is more than 0.9%, the alloy becomes hypereutectic and coarse Cu₆Sn₅ precipitates at the joint interface, so that the shear strength is deteriorated. In addition, the fracture mode becomes the joint interface. Moreover, since the shear strength is deteriorated, cracks occur during the heat cycle test, the standard deviation increases, and the heat cycle resistance becomes poor. In terms of the upper limit, the Cu content is 0.9% or less, and preferably 0.8% or less.

### (3) In: 1.0 to 5.0%

In contributes to improvement of shear strength, optimization of a fracture mode, and improvement of heat cycle resistance. When the In content is less than 1.0%, the shear strength becomes poor, wet-spreading is also insufficient due to decreased wettability, and the effect of solid solution strengthening is insufficient, so that the fracture mode is inappropriate, and the heat cycle resistance also becomes poor. In terms of the lower limit, the In content is 1.0% or more, preferably 1.5% or more, more preferably 2.0% or more, further preferably 2.5% or more, and particularly preferably 3.0% or more.

On the other hand, when the In content is more than 5.0%, a large amount of the compound is precipitated and the melting point increases. Moreover, the bulk strength is excessively improved, and the shear strength decreases. In addition, there is a concern of fracture at the joint interface or in the component. In addition, since the bulk strength increases, cracks occur during the heat cycle test, the standard deviation value increases, and the heat cycle resistance becomes poor. In terms of the upper limit, the In content is 5.0% or less, preferably 4.5% or less, more preferably 4.0% or less, and further preferably 3.5% or less.

### (4) Sb: 3.0 to 5.0%

Sb contributes to suppression of an increase in a melting point, improvement of shear strength, optimization of a fracture mode, and improvement of heat cycle resistance. When the Sb content is less than 3.0%, solid solution strengthening to Sn and precipitation strengthening of the Sn-Sb compound are not sufficient, and therefore the shear strength becomes poor. In terms of the lower limit, the Sb content is 3.0% or more, preferably 3.5% or more, more preferably 3.6% or more, further preferably 3.8% or more, particularly preferably 3.9% or more, and most preferably 4.0% or more.

On the other hand, when the Sb content is more than 5.0%, coarse SnSb compounds are formed, so that the shear strength becomes poor. Moreover, the wettability deteriorates and the fracture mode is the joint interface or component fracture, becoming inappropriate. In addition, since the bulk strength increases, cracks occur during the heat cycle test, the standard deviation increases, and the heat cycle resistance becomes poor. In terms of the upper limit, the Sb content is 5.0% or less, preferably 4.8 or less, more preferably 4.6% or less, further preferably 4.5% or less, particularly preferably 4.3% or less, and most preferably 4.1% or less.

### (5) Fe: 0.0010 to 0.0300%

Fe contributes to improvement of shear strength, optimization of a fracture mode, and improvement of heat cycle resistance. When the Fe content is less than 0.0010%, the effect of interface strengthening by modification of the intermetallic compound layer formed at the interface is not sufficient, and therefore the shear strength becomes poor. In terms of the lower limit, the Fe content is 0.0010% or more, preferably 0.0050% or more, more preferably 0.0100% or more, further preferably 0.0150% or more, and particularly preferably 0.0200% or more.

On the other hand, when the Fe content is more than 0.0300%, a compound of Sn and Fe is precipitated, and the bulk strength is excessively improved, so that the shear strength becomes poor, and there is also a risk of fracture at the joint interface. In terms of the upper limit, the Fe content is 0.0300% or less, preferably 0.0270% or less, and more preferably 0.0250% or less.

### (6) Co: 0.0010 to 0.0500%

Co contributes to suppression of an increase in a melting point, improvement of shear strength, optimization of a fracture mode, and improvement of heat cycle resistance. When the Co content is less than 0.0010%, the refinement effect of the bulk is not sufficient, so that the shear strength decreases. In terms of the lower limit, the Co content is 0.0010% or more, preferably 0.0030% or more, more preferably 0.0060% or more, and further preferably 0.0080% or more.

On the other hand, when the Co content is more than 0.0500%, a compound of Sn and Co is precipitated and the bulk strength is increased, causing the fracture mode to be an interfacial fracture. In addition, the melting point greatly increases due to precipitation of a large amount of the compound, and wettability deteriorates, so that shear strength decreases. Moreover, since the bulk strength increases, cracks occur during the heat cycle test, the standard deviation increases, and the heat cycle resistance becomes poor. In terms of the upper limit, the Co content is 0.0500% or less, preferably 0.0300% or less, and more preferably 0.0100% or less.

### (7) Balance: Sn

The balance of the solder alloy according to the present invention is Sn. In addition to the above-described elements, unavoidable impurity may be contained. Even when unavoidable impurity is contained, it does not affect the above-described effects. It is to be noted that, in the present invention, Ni is preferably not contained in the Sn-Ag-Cu-In-Sb-Fe-Co solder alloy because, when the respective contents are within the aforementioned ranges, the addition of even a small amount of Ni causes the melting point to rise sharply. In addition, according to the present invention, it is preferable not to contain Mn since the melting point increases, the wettability deteriorates, an appropriate compound cannot be formed, and the shear strength decreases. Moreover, when Bi coexists with In, it forms a low-melting-point Sn-In-Bi phase. In view of creep deformation, the low-melting-point phase has such a low melting point that a room temperature environment constitutes a high temperature environment, and is therefore susceptible to creep deformation and the strength is reduced. Therefore, in the present invention, it is preferable not to contain Bi.

### (8) At least one of Zr, Ge, Ga, P, As, Pb, Zn, Mg, Cr, Ti, Mo, Pt, Pd, Au, Al, and Si: 0.100% or less in total

The solder alloy according to the present invention can contain at least one of Zr, Ge, Ga, P, As, Pb, Zn, Mg, Cr, Ti, Mo, Pt, Pd, Au, Al, and Si in the range of 0.100% or less in total as an optional element to the extent that the effect of the present invention is not impaired. Preferably, the total amount is 0.080% or less. In terms of the lower limit, the content may be 0.0001% or more, or may be 0.001% or more, although not particularly limited.

### (9) Relations (1) and (2):

$0.0020 ≦ Ag \times Cu \times In \times Sb \times Fe \times Co ≦ 0.0090$ (1) $445 ≦ In / \left(Ag\times Cu\times Sb\times Fe\times Co\right) ≦ 3560$ (2) where Ag, Cu, In, Sb, Fe, and Co in the Relations (1) and (2) each represent the content in mass% thereof in the solder alloy.

Relation (1) is a relation in which the balance of the additive elements of the solder alloy according to the present invention is taken into consideration. The solder alloy according to the present invention can exhibit a low melting point, a high shear strength, an appropriate fracture mode, and high heat cycle resistance by a synergistic effect of each constituent element. Therefore, when the balance of all the constituent elements except Sn is further optimized, all the effects of the present invention can be further improved. In Relation (1), the Ag, Cu, In, and Sb contents are approximately 10 to 100 times the content of Fe and Co. However, it is considered that their contributions to the solder alloy are almost the same level. Therefore, in order to further improve the low melting point, the high shear strength, the appropriate fracture mode, and the high heat cycle resistance in the present invention at the same time with one composition, a balanced content is preferably required.

Relation (2) is a relation in which the balance between In and other elements among the additive elements of the solder alloy according to the present invention is taken into consideration. When In is less than the lower limit or more than the upper limit of the content range, the shear strength becomes poor and the fracture mode is also inappropriate as compared with other additive elements. This is a phenomenon peculiar to the Sn-Ag-Cu-In-Sb-Co-Fe solder alloy according to the present invention. The reason for this is not clear, but it is presumed that wet-spreading is insufficient due to decreased wettability, and the effect of solid solution strengthening is insufficient.

In the calculation of Relations (1) and (2), numerical values themselves as indicated as the actual measured values of the alloy composition shown in the following Tables 1 and 2 are used. That is, in the calculation of Relations (1) and (2), all digits smaller than the number of significant digits in the actual measured values shown in the following Tables 1 and 2 are regarded as 0. For example, when the Co content is "0.008" mass% as an actual measured value, the Co content used for the calculation of Relations (1) and (2) does not have a range of 0.0075 to 0.0084%, but is handled as "0.008000...". In Relation (1), the number is calculated to five decimal places and the digit in the fifth decimal place is rounded off to obtain a number to four decimal places. In Relation (2), the number is calculated to one decimal place and the digit in the first decimal place is rounded off to obtain the nearest whole number.

It is to be noted that, when Relations (1) and (2) are calculated from the alloy compositions specifically disclosed in the patent documents and other documents cited in the present specification, the same manner of calculation is applied.

As described above, in the alloy, all the constituent elements do not function individually, but all the constituent elements form one object as a whole. Therefore, it is rare that all the excellent effects are simultaneously exerted only by one element. Therefore, as described above, in order to exhibit more excellent properties within the range of the optimum content of each constituent element, it is necessary to study the constituent elements as a whole. In the solder alloy according to the present invention, it is preferable to satisfy Relations (1) and (2) in order to achieve all of a low melting point, a high shear strength, an appropriate fracture mode, and high heat cycle resistance by one composition and at a higher level.

In terms of the lower limit of Relation (1), it is preferably 0.0020 or more, more preferably 0.0021 or more, still more preferably 0.0022 or more, still further preferably 0.0023 or more, particularly preferably 0.0024 or more, and most preferably 0.0028 or more, 0.0029 or more, 0.0033 or more, 0.0034 or more, 0.0035 or more, 0.0036 or more, 0.0038 or more, 0.0042 or more, 0.0043 or more, 0.0045 or more, 0.0046 or more, 0.0048 or more, 0.0049 or more, 0.0050 or more, or 0.0057 or more. In terms of the upper limit of Relation (1), it is preferably 0.0090 or less, more preferably 0.0086 or less, still more preferably 0.085 or less, still further preferably 0.0083 or less, particularly preferably 0.0076 or less, and most preferably 0.0073 or less, 0.0071 or less, 0.0069 or less, 0.0068 or less, 0.0067 or less, 0.0066 or less, 0.0065 or less, 0.0064 or less, 0.0061 or less, or 0.0060 or less.

In terms of the lower limit of Relation (2), it is preferably 445 or more, more preferably 525 or more, still more preferably 630 or more, still further preferably 700 or more, particularly preferably 787 or more, and most preferably 788 or more, 840 or more, 1050 or more, 1225 or more, 1260 or more, 1261 or more, 1313 or more, 1378 or more, 1379 or more, 1400 or more, 1401 or more, 1470 or more, 1471 or more, or 1488 or more. In terms of the upper limit of Relation (2), it is preferably 3560 or less, more preferably 3501 or less, still more preferably 3151 or less, still further preferably 2801 or less, particularly preferably 2679 or less, and most preferably 2678 or less, 2626 or less, 2450 or less, 2451 or less, 2363 or less, 2143 or less, 2142 or less, 2101 or less, 2100 or less, 1970 or less, 1969 or less, 1891 or less, 1890 or less, 1838 or less, 1786 or less, 1785 or less, 1751 or less, 1750 or less, 1681 or less, 1680 or less, 1576 or less, or 1575 or less.

It is to be noted that, in Examples described below, "Excellent" indicates that the example is particularly preferable in practical use as compared with "Good". Since "Good" is a more preferable result than the prior art, when other evaluation results are also excellent, they are within the scope of the present invention and handled as examples. Since "Poor" is an insufficient result in the present invention, it is outside the scope of the present invention, and is handled as a comparative example.

The heat cycle resistance in the present invention is obtained in consideration of variation for each sample after the heat cycle test, and the heat cycle resistance with a smaller deviation from the average value is determined as a favorable result. For this reason, as in the heat cycle resistance that has been studied heretofore, the meaning of this evaluation is greatly different from the evaluation that is simply compared by an average value.

### 2. Solder Paste

A solder paste according to the present invention is a mixture of a solder powder consisting of the alloy composition described above and a flux. A flux to be used in the present invention is not particularly limited as long as soldering by an ordinary method is possible. Therefore, a flux appropriately blended with rosin, an organic acid, an activator, a thixotropic agent, as well as a solvent, all of which are commonly used, may be employed. Blending ratios of the metal powder component and the flux component in the present invention are preferably the metal powder component: 70 to 90 mass%, the flux component: 10 to 30 mass%, although not particularly limited.

### 3. Solder Ball

The solder alloy according to the present invention can be used as a solder ball. In the case of using the solder alloy according to the present invention as a solder ball, a solder ball can be manufactured using a dropping method which is a common method in the art. In addition, a solder joint can be manufactured by processing a solder ball using a common method in the art, such as mounting and joining one solder ball on one electrode coated with flux. A particle size of the solder ball is preferably 1 µm or more, more preferably 10 µm or more, still more preferably 20 µm or more, and particularly preferably 30 µm or more. In terms of the upper limit, the particle size of the solder ball is preferably 3000 µm or less, more preferably 1000 µm or less, still more preferably 800 µm or less, and particularly preferably 600 µm or less.

### 4. Solder Preform

The solder alloy according to the present invention can be used as a solder preform. Examples of the shape of the preform include a washer, a ring, a pellet, a disk, a ribbon, and a wire.

### 5. Solder Joint

A solder joint according to the present invention is preferably used to join at least two or more of members to be joined. The members to be joined are not particularly limited as long as they are electrically connected by using the solder alloy according to the present invention, and examples thereof include element, boards, electronic components, printed circuit boards, insulated boards, heat sinks, lead frames, and semiconductors using electrode terminals, and the like, power modules and inverter products, and the like.

The joining method using the solder alloy according to the present invention may be performed according to a conventional method using, for example, a reflow method. The melting temperature of the solder alloy in the case of performing reflow soldering may be a temperature approximately 20°C higher than the liquidus-line temperature. In addition, when joining is performed using the solder alloy according to the present invention, the alloy structure can be further refined in consideration of the cooling rate during solidification. For example, the solder joint is cooled at a cooling rate of 2 to 3°C /s or more. The other joining conditions can be appropriately adjusted according to the alloy composition of the solder alloy.

### 6. Vehicle-Mounted Electronic Circuit, ECU Electronic Circuit, Vehicle-Mounted Electronic Circuit Device, ECU Electronic Circuit Device

As is apparent from the above description, the solder alloy according to the present invention has a suppressed increase in a melting point, an excellent shear strength, an appropriate fracture mode, and excellent heat cycle resistance. Therefore, even when used for vehicles exposed to severe environments, that is, for vehicle-mounted devices, fracture of solder joints is suppressed without variation. Consequently, since the solder alloy has such particularly remarkable properties, it is found that the solder alloy according to the present invention is particularly suitable for soldering of an electronic circuit mounted on a vehicle.

The term "excellent in heat cycle resistance" as used herein means that a heat cycle test of holding at -40°C and +125°C for 10 minutes each is performed as shown in Examples described later, and the standard deviation of the number of cycles until the electrical resistance of the solder joint increases by 20% from the value before the heat cycle test is 1000 or less. Such properties mean that the possibility of fracture of the vehicle-mounted electronic circuit is reduced as much as possible even when the vehicle-mounted electronic circuit is used under very severe conditions such as the heat cycle test above, and the vehicle-mounted electronic circuit remains usable or does not malfunction.

As described above, the solder alloy according to the present invention is more specifically used for soldering of a vehicle-mounted electronic circuit or used for soldering of an ECU electronic circuit, and exhibits excellent heat cycle resistance.

The "electronic circuit" is a system that exhibits a target function as a whole through an electronic engineering combination of a plurality of electronic components, each having a function.

Examples of the electronic component constituting such an electronic circuit include a chip resistor, a multiple resistance component, QFP, QFN, a power transistor, a diode, a capacitor, etc. The electronic circuit incorporating these electronic components is provided on a board and constitutes an electronic circuit device.

In the present invention, a board constituting such an electronic circuit device, for example, a printed wiring board is not particularly limited. The material thereof is also not particularly limited, but a heat-resistant plastic board (for example, FR-4 having a high Tg and a low CTE) is exemplified. The printed wiring board is preferably a printed circuit board in which the Cu land surface is treated with an organic matter (OSP: Organic Surface Protection) such as amine or imidazole.

### 7. Other

As the solder alloy according to the present invention, by using a low α-ray material as a raw material, a low α-ray alloy can be produced. Such a low α-ray alloy can prevent a soft error when used for forming solder bumps around a memory.

### Examples

The present invention will be described based on the following examples; however, the present invention is not limited to the following examples.

In order to verify the effect of the present invention, solder alloys described in Tables 1 and 2 were used to evaluate (1) melting point, (2) shear strength, (3) fracture mode, and (4) heat cycle resistance test (TCT). It is to be noted that, regarding (4), Example 4 and Comparative Example 19 are extracted from the following Examples and Comparative Examples, and the evaluation results thereof are shown.

### (1) Melting Point

For the solder alloys shown in Table 1 and Table 2, each temperature was determined from the DSC curve. The DSC curve was obtained with a DSC (model number: 6200) manufactured by Seiko Instruments Inc., by raising the temperature at 5°C/min in the atmosphere. The liquidus-line temperature was determined from the obtained DSC curve and taken as the melting point. When the melting point is 232°C or lower, reflow soldering can be performed at the same temperature as in the prior art. When the melting point is more than 232°C, conventional reflow soldering cannot be performed since the melting point is high.

### (2) Shear Strength

### (2-1) Fabrication of Samples

Solder alloys shown in Tables 1 and 2 were cast to prepare solder sheets (diameter: 1 mm, thickness: 0.15 mm). Using the reflow furnace (SNR-615: manufactured by SENJU METAL INDUSTRY CO., LTD.), a chip resistor was soldered to the Cu-OSP electrode of the FR-4 board. As the chip resistor, 3216CR (CR32-114JV: manufactured by HOKURIKU ELECTRIC INDUSTRY CO., LTD.) was used. The reflow profile was maintained at 220°C or more for 40 seconds, and the peak temperature was 245°C in a nitrogen atmosphere.

### (2-2) Evaluation of Shear Strength

The sample thus prepared was measured for shear strength using the shear tester (STR-1000: manufactured by RHESCA) at a shear rate of 6 mm/min. When the shear strength was 84.0N or more, it was determined as "Excellent". When the shear strength was 70.0N or more and less than 84.0N, it was determined as "Good". When the shear strength was less than 70.0N, it was determined as "Poor".

### (3) Fracture Mode

The sample evaluated in "(2) Shear Strength" above was observed for the fracture mode using the optical microscope (VHX-5000: manufactured by KEYENCE Corporation). When the sample was fractured in the bulk, it was determined as "Excellent". When the sample was fractured in the bulk and at intermetallic compound (IMC) at the joint interface, it was determined as "Good". When the sample was fractured at the intermetallic compound at the joint interface, it was determined as "Poor".

### (4) Heat Cycle Resistance Test (TCT)

Example 4 was selected from Table 1, and Comparative Example 19 was selected from Table 2, and each solder alloy was atomized into a solder powder. A soldering flux ("GLV" manufactured by SENJU METAL INDUSTRY CO., LTD.) containing pine resin, a solvent, an activator, a thixotropic agent, an organic acid, etc., was mixed to prepare a solder paste of each solder alloy. The alloy powder of the solder paste was 88 mass%, and the flux was 12 mass%. The solder paste was printed on a printed circuit board (material: FR-4) having a thickness of 0.8 mm with a metal mask having a thickness of 100 µm, and then a 12 mm × 12 mm land grid array (LGA) component was mounted with a mounter, and subjected to reflow soldering with the same reflow profile as in the above "(2) (2 -1)" to prepare a sample. 15 samples were prepared for Example 4, and 14 samples were prepared for Comparative Example 18.

The prepared sample was placed in the heat cycle tester (TSA-101L-A: manufactured by ESPEC CORP.) set at a condition which is a low temperature of -40°C, a high temperature of +125°C, and a holding time of 10 minutes, and the resistance value was measured during the test. It was assumed that fracture occurred when the resistance value was increased by 20% from the initial resistance value, and the average value and standard deviation of the number of cycles in which fracture occurred were obtained. When the standard deviation was 1000 or less, it was determined that variation was practically acceptable. On the other hand, when the standard deviation was more than 1000, since there were samples far from the average value, it was determined that the variation was not practical.

The evaluation results of (1) to (3) as described above are shown in Tables 1 and 2. In addition, the evaluation results of (4) are shown in Table 3.

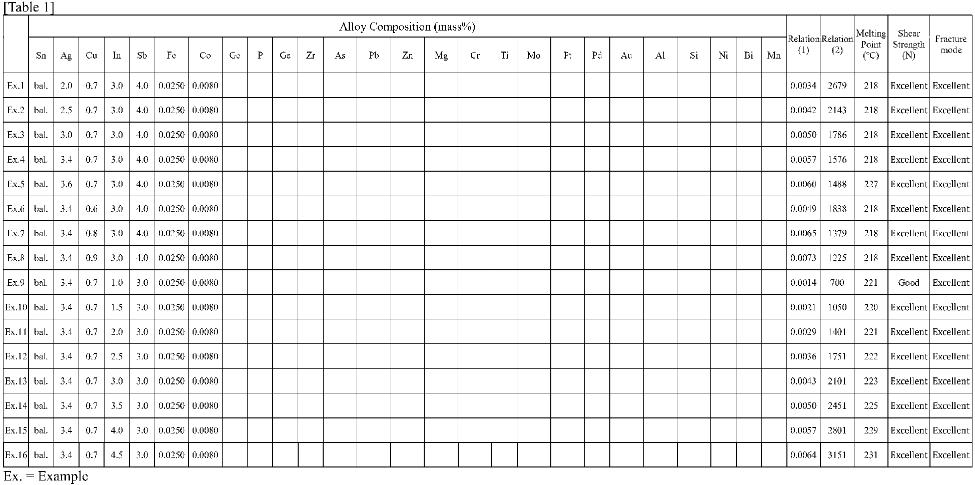

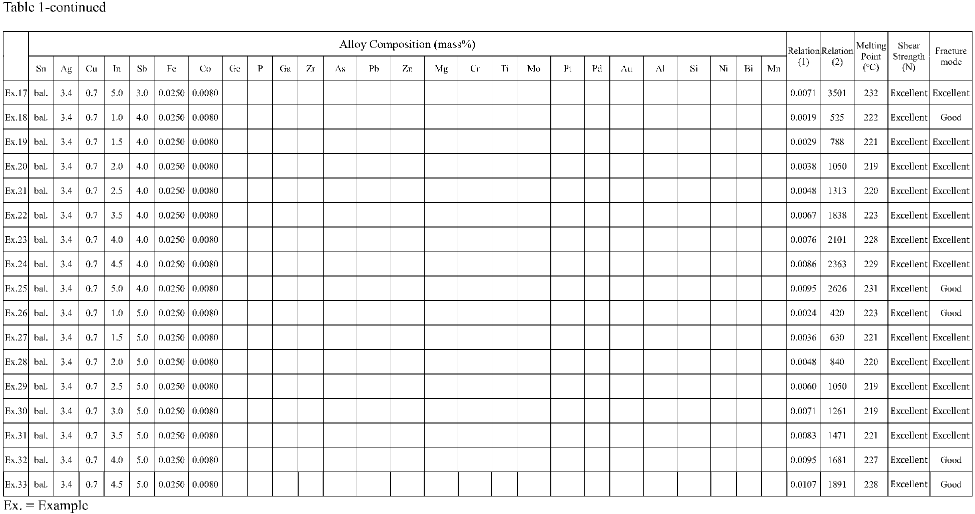

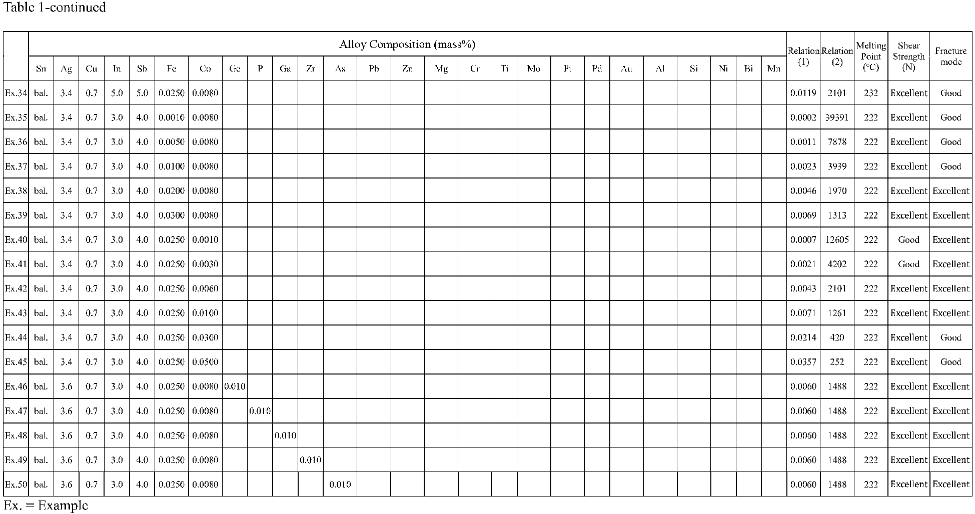

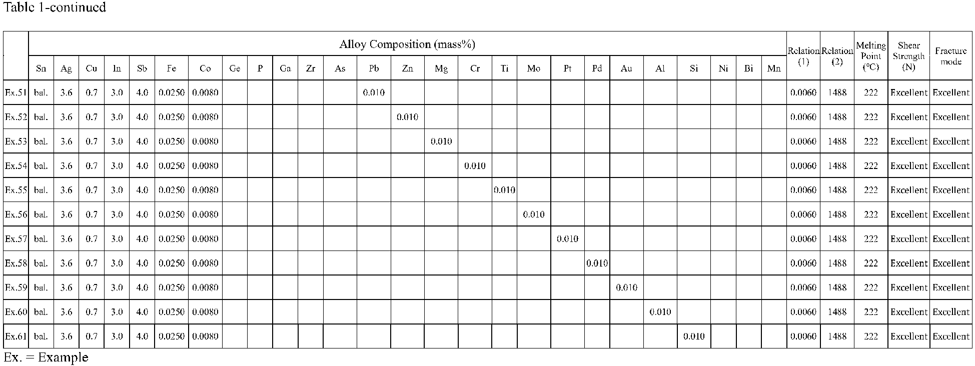

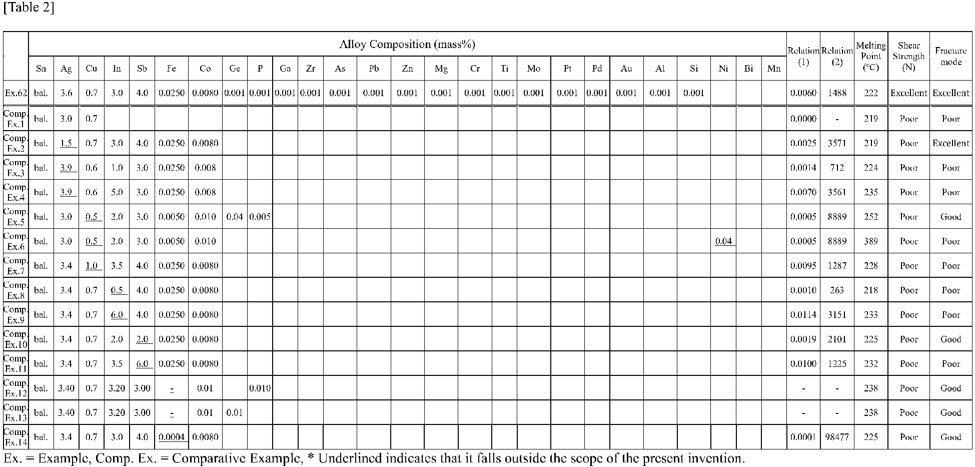

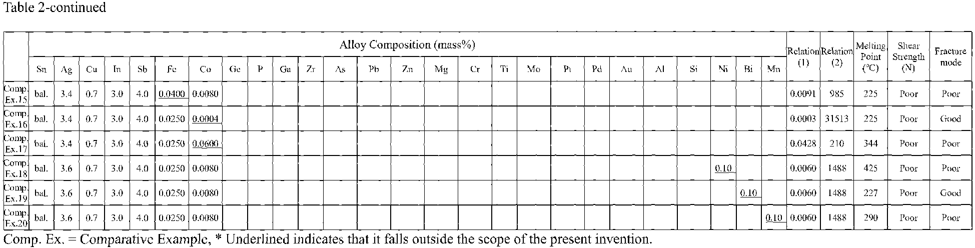

**[Table 3]**

| | Alloy Composition (mass%) | | | | | | | | Relation (1) | Relation (2) | Average Number of Cycles | Standard Deviation of the Number of Cycles |
|---|---|---|---|---|---|---|---|---|---|---|---|---|
| | Sn | Ag | Cu | In | Sb | Fe | Co | Bi | | | | |
| Ex.4 | bal. | 3.4 | 0.7 | 3.0 | 4.0 | 0.0250 | 0.0080 | | 0.0057 | 1576 | 4130.8 | 846.7 |
| Comp.Ex.19 | bal. | 3.6 | 0.7 | 3.0 | 4.0 | 0.0250 | 0.0080 | 0.10 | 0.0060 | 1488 | 4474.9 | 1899.5 |

| | | | | | | | | | | | | |
|---|---|---|---|---|---|---|---|---|---|---|---|---|
| Ex. = Example, Comp. Ex. = Comparative Example, | | | | | | | | | | | | |

As shown in Table 1 and Table 2, in Examples 1 to 62, all the contents of the respective constituent elements were appropriate, and thus all evaluations were result in acceptable for practical use. In addition, it was found that Examples 1 to 8, 10 to 17, 19 to 24, 27 to 31, 38, 39, 42, 43, and 46 to 62 satisfying Relations (1) and (2) exhibited extremely excellent results in all evaluations. Among the practically acceptable results, the excellent results showed significant differences.

On the other hand, as shown in Table 2, since Comparative Example 1 did not contain In, Sb, Fe, and Co, the shear strength was poor, and the fracture mode was inappropriate. In Comparative Example 2, the Ag content was low, and thus the shear strength was poor. In Comparative Examples 3 and 4, the Ag content was high, and thus the shear strength was poor and the fracture mode was inappropriate.

In Comparative Examples 5 and 6, the Cu content was low, and thus the shear strength was poor. In particular, in Comparative Example 6, the fracture mode was also inappropriate since Ni was contained. In Comparative Example 7, the Cu content was high, and thus the shear strength was poor and the fracture mode was inappropriate.

In Comparative Examples 8 and 9, the In content was inappropriate, and thus the shear strength was poor and the fracture mode was inappropriate. In Comparative Example 10, the Sb content was low, and thus the shear strength was poor. In Comparative Example 11, the Sb content was high, and thus the shear strength was poor and the fracture mode was inappropriate.

In Comparative Examples 12 to 14, the Fe content was low, and thus the shear strength was poor. In Comparative Example 15, the Fe content was high, and thus the shear strength was poor and the fracture mode was inappropriate.

In Comparative Example 16, the Co content was low, and thus the shear strength was poor. In Comparative Example 17, the Co content was high, and thus the shear strength was poor and the fracture mode was inappropriate.

Since Comparative Example 18 and Comparative Example 20 contained Ni or Mn, respectively, the melting point was significantly increased, the shear strength was poor, and the fracture mode was inappropriate. In Comparative Example 19, Bi was contained, and thus the shear strength was poor.

In addition, as is apparent from Table 3, the average number of cycles was about 300 cycles different between Example 4 and Comparative Example 19. However, the standard deviation of the number of cycles in Example 4 was less than 1000, whereas the standard deviation of the number of cycles in Comparative Example 19 was significantly more than 1000.

Therefore, in Example 4, it was found that there were only samples having a small difference from the average value since the variation in the heat cycle test was limited. It was found that similar results are shown in other Examples. On the other hand, in Comparative Example 19, it was found that there were samples having an extremely large difference from the average value since the variation in the heat cycle test was significant.

FIG. 1 shows an optical microscope photograph of a sample after the shear strength is measured. FIG. 1(a) shows Example 4, FIG. 1(b) shows Comparative Example 19, and FIG. 1(c) shows Comparative Example 3. As is apparent from FIG. 1, in Example 4, it was found that the solder joint was fractured due to bulk fracture. On the other hand, in Comparative Example 19, it was found that the solder joint fractured due to both bulk fracture and fracture in the intermetallic compound at the joint interface. Moreover, in Comparative Example 3, it was found that the solder joint fractured in the intermetallic compound at the joint interface. Therefore, in Example 4, it was found that the fracture mode was appropriate. This result was similar in other Examples.

### Industrial Applicability

The solder according to the present invention can be used in a vehicle-mounted electronic circuit such as an ECU which is an electronic circuit for controlling a vehicle by a computer in order to improve fuel efficiency. Meanwhile, for example, the solder according to the present invention can also be used in a consumer electronic device such as a personal computer and exhibits an excellent effect.

## Claims

1. A solder alloy having an alloy composition consisting of, by mass%,
Ag: 2.0 to 3.6%,
Cu: 0.6 to 0.9%,
In: 1.0 to 5.0%,
Sb: 3.0 to 5.0%,
Fe: 0.0010 to 0.0300%,
Co: 0.0010 to 0.0500%, with the balance being Sn,
wherein the alloy composition satisfies the following Relations (1) and (2): $0.0020 ≦ Ag \times Cu \times In \times Sb \times Fe \times Co ≦ 0.0090$ (1) $445 ≦ In / \left(Ag\times Cu\times Sb\times Fe\times Co\right) ≦ 3560$ (2)
wherein Ag, Cu, In, Sb, Fe, and Co in the Relations (1) and (2) each represent the content in mass% thereof in the solder alloy.

2. The solder alloy according to claim 1,
wherein, by mass%,
the alloy composition further contains at least one of Zr, Ge, Ga, P, As, Pb, Zn, Mg, Cr, Ti, Mo, Pt, Pd, Au, Al, and Si: 0.100% or less in total.

3. A solder paste having a solder powder consisting of the solder alloy according to claim 1 or 2.

4. A solder ball consisting of the solder alloy according to claim 1 or 2.

5. A solder preform consisting of the solder alloy according to claim 1 or 2.

6. A solder joint having the solder alloy according to claim 1 or 2.

7. A vehicle-mounted electronic circuit having the solder alloy according to claim 1 or 2.

8. An ECU electronic circuit having the solder alloy according to claim 1 or 2.

9. A vehicle-mounted electronic circuit device comprising the vehicle-mounted electronic circuit according to claim 7.

10. An ECU electronic circuit device comprising the ECU electronic circuit according to claim 8.
